# EUROPÄISCHE PATENTSCHRIFT

(11) **EP 1 256 467 B1**
(45) Veröffentlichungstag und Bekanntmachung des Hinweises auf die Patenterteilung: **05.03.2008**
(21) Anmeldenummer: 02010303.2
(22) Anmeldetag: 07.05.2002
(51) Int. Cl.: B60G 17/08

(54) **Verfahren zur Regelung des Dämpferstromes für elektrisch verstellbare Dämpfer**
Method for controlling the flow of electrically controlled dampers
Méthode de contrôle du flux d'un amortiseur contrôlé électriquement

(30) Priorität: 09.05.2001 DE 10122536; 22.05.2001 DE 10125228
(43) Veröffentlichungstag der Anmeldung: 13.11.2002
(73) Patentinhaber: Continental Aktiengesellschaft, 30165 Hannover (DE)
(72) Erfinder: Kock, Jörg, 30938 Burgwedel (DE); Johannknecht, Ralf, 30989 Gehrden (DE); Grotendorst, Jörg, 30823 Garbsen (DE); Zoufal, Stefan, 30926 Dedensen (DE); Stiller, Alexander, 30823 Garbsen (DE); Hoinkhaus, Hermann, 30938 Burgwedel (DE)

(56) Entgegenhaltungen:
- EP-A- 0 382 480
- EP-A- 0 446 637
- GB-A- 2 273 473
- US-A- 3 006 656
- US-A- 4 526 401
- US-A- 4 948 163
- US-A- 4 969 662
- US-A- 6 131 709

## Beschreibung

Die Erfindung betrifft ein Verfahren zur Regelung des Dämpferstromes eines elektrisch verstellbaren Dämpfers eines Kraftfahrzeuges. Mit derartigen Dämpfern werden die Schwingungen des Fahrzeugaufbaus gegenüber den Rädern des Kraftfahrzeuges gedämpft, wobei sich zumindest an den Rädern eine Achse entsprechend der Dämpfer befinden.

Bei einem elektrisch verstellbaren Dämpfer, der aus dem Stand der Technik an sich bekannt ist, kann die Dämpfersollkraft mit Hilfe eines regelbaren elektrischen Stromes in Abhängigkeit von der Fahrsituation des Kraftfahrzeuges, in das der Dämpfer eingebaut ist, eingestellt werden. Hierbei wird der Strom mit Hilfe einer Strom-Dämpfkraftkennlinie geregelt, indem abhängig von der Fahrzeugsituation eine bestimmte Dämpferkraft vorgegeben und dann aus der Kennlinie bestimmt wird, welcher Strom einzustellen ist, um die vorgegebene Dämpferkraft einzustellen. Dieses Verfahren der Regelung von elektrisch verstellbaren Dämpfern wird auch in dem Skyhook-Regelverfahren benutzt, welches häufig in der Literatur zitiert wird.

Die Druckschrift EP0382480A2 offenbart ein Verfahren zur Dämpferkrafteinstellung an verstellbaren Dämpfern eines Kraftfahrzeuges, wobei das Schalten des Dämpfers vom einen zum anderen Zeitpunkt verzögert wird, bis eine Bedingung erfüllt ist. Als Bedingung ist zum einen angegeben, dass die vom dritten Teil gespeicherte Energie nicht größer ist als eine vorgewählte niedrige Größe. Als eine alternativa Bedingung ist angegeben, dass die absolute Geschwindigkeit des gestützten Teils nicht größer ist als eine vorgegebene niedrige Größe. Als weitere alternative Bedingung ist vorgegeben, dass das Vorzeichen des Produkts aus Relativverschiebung und Relativgeschwindigkeit der Teile negativ ist, und, dass die Relativgeschwindigkeit der Teile nicht größer ist als eine vorgewählte Größe.

Zudem kann lant Spalte 3, Zeilen 21-26 dieser Druckschrift die zulässige Änderung des Dämpfungskoeffizientes begrenzt werden.

Die Druckschrift GB2273473A offenbart ein System zur Regelung oder Steuerung eines regelbaren oder steuerbaren Fahrwerks eines Kraftfahrzeuges, welches zwischen den dem Fahrzeugaufbau und den Rädern angeordnete Aktuatoren aufweist, die zur fahrzustandsabhängigen Aufbringung von Kräften mit Signalen beaufschlagt werden. Bei einem solchen System sind Mittel vorgesehen, die die zeitlichen Änderungen der Signale bzw. der aufzubringenden Kräfte gegenüber einem festen Grenzwert begrenzen, welcher unabhängig von den Dämpferkraftänderungen ist, wodurch Kraftspitzen unterbunden werden, wobei durch die Mittel die Begrenzungen je nach Vorzeichen der zeitlichen Änderungen der Signale unterschiedlich getätigt werden oder wobei mehrere Schwellwerte verwendet werden.

Bei der Regelung des Stromes für die elektrisch verstellbaren Dämpfer eines Kraftfahrzeuges führen Stromsprünge zu Sprüngen in der Dämpferkraft des jeweiligen Dämpfers, so dass die Dämpferkraft sehr schnell an die jeweilige Fahrzeugsituation des Kraftfahrzeuges angepasst werden kann. Es hat sich jedoch gezeigt, dass Sprünge in der Dämpferkraft unerwünschte Geräusche in dem Kraftfahrzeug verursachen können.

Der Erfindung liegt die Aufgabe zugrunde, die auf Sprünge in der Dämpferkraft eines elektrisch verstellbaren Dämpfers zurückzuführenden Geräusche im Kraftfahrzeug zu vermindern bzw. möglichst komplett zu unterdrücken.

Erfindungsgemäß wird die Aufgabe dadurch gelöst, dass die zulässige Änderung des Stromes, der zur Regelung des elektrisch verstellbaren Dämpfers benutzt wird (und damit die zulässige Änderung der Dämpferkraft), pro Zeitintervall nach Anspruch 1 begrenzt wird. Durch die Vorgabe einer Grenze für die Stromänderung können, ausgehend von der momentan eingestellten Dämpferkraft, nur Dämpferkräfte innerhalb bestimmter Grenzen eingestellt werden. Diese Grenzen werden so abgestimmt, dass sich durch die Dämpferkraftänderung, die sich durch die Stromänderung in einem Zeitintervall ergibt, keine störenden Geräusche im Fahrzeug ergeben.

Gemäß einer weiteren Weiterbildung der Erfindung wird sowohl die Grenze pro Zeitintervall für die positive Stromänderung als auch die Grenze für die Stromänderung pro Zeitintervall für die negative Stromänderung in Abhängigkeit von dem einzuregelnden Sollstrom vorgegeben wird. Der Vorteil dieser Weiterbildung ist darin zu sehen, dass eine zusätzliche Möglichkeit geschaffen wird, die Grenzen für die Stromänderung in Abhängigkeit von der Strom-Dämpferkraftkennlinie vorzugeben und an diese anzupassen.

Gemäß einer zusätzlichen Weiterbildung der Erfindung wird die Grenze der zulässigen Stromänderung pro Zeitintervall sowohl für die positive Stromänderung als auch für die negative Stromänderung als Funktion der Aufbaugeschwindigkeit des Kraftfahrzeuges (also der relativen Geschwindigkeit des Aufbaus des Kraftfahrzeuges zum Rad des Kraftfahrzeuges im Bereich des entsprechenden Dämpfers) vorgegeben. Diese Weiterbildung ist insbesondere bei der Verwendung des Skyhook-Regelverfahrens vorteilhaft, da bei diesem Regelverfahren die Dämpferkraftanforderung aus der Aufbaugeschwindigkeit abgeleitet wird, im einfachsten Fall über ein Proportionalglied. In diesem Fall wird also bei niedrigen Aufbaugeschwindigkeiten eine geringe Dämpferkraftanforderung eingestellt und bei hohen Aufbaugeschwindigkeiten eine hohe Dämpferkraft. Insbesondere bei kleinen Dämpfergeschwindigkeiten können daher durch das erfindungsgemäße Verfahren große Stromsprünge vermieden werden, indem bei niedriger Aufbaugeschwindigkeit die zulässige Stromänderung stark eingeschränkt wird.

Gemäß einer Weiterbildung der Erfindung liegt die Dauer der Zeitintervalle, innerhalb derer eine bestimmte Stromänderung zugelassen wird, die durch die Grenzen beschränkt ist, im Bereich von 1 ms - 50 ms, vorzugsweise im Bereich von 15 - 25 ms.

Ein Ausführungsbeispiel und weitere Vorteile der Erfindung werden im Zusammenhang mit den nachstehenden Figuren erläutert, darin zeigt:
- Fig. 1: ein Diagramm,
- Fig. 2: ein Diagramm,
- Fig. 3a: ein Diagramm,
- Fig. 3b: ein Diagramm.

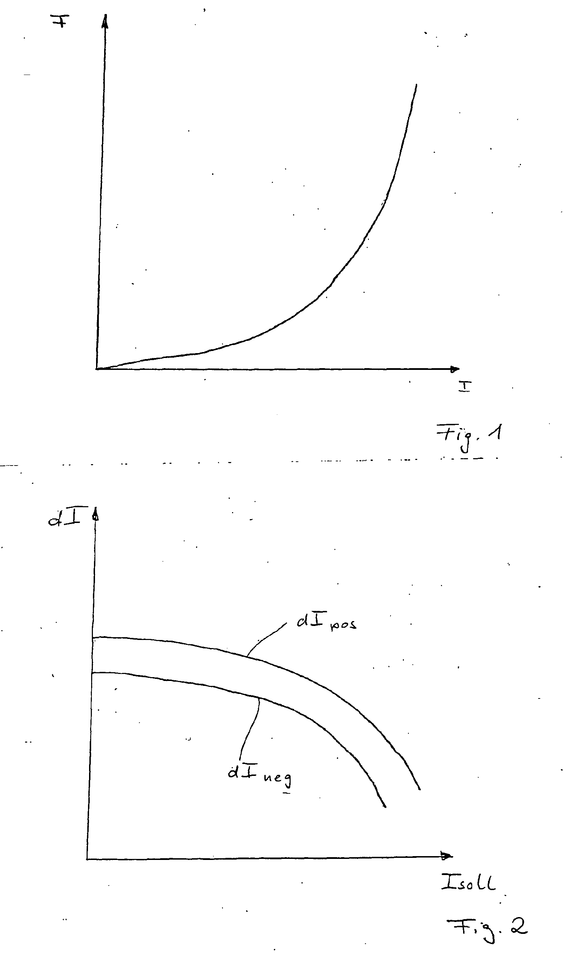

Figur 1 zeigt beispielhaft eine Strom-Dämpferkraftkennlinie für einen elektrisch verstellbaren Dämpfer eines Kraftfahrzeuges für eine bestimmte Aufbaugeschwindigkeit (zu jeder Aufbaugeschwindigkeit des Kraftfahrzeuges gehört eine separate Strom-Dämpferkraftkennlinie und eine solche ist entsprechend in der Steuereinheit des Kraftfahrzeuges gespeichert). Der Dämpfer des Kraftfahrzeuges wird wie folgt geregelt: Die Dämpferkraft F hat einen bestimmten Wert, der durch einen bestimmten elektrischen Strom an dem Dämpfer eingestellt ist. Von der Elektronik des Kraftfahrzeuges wird erkannt, dass die momentane Dämpferkraft aufgrund der Fahrsituation des Kraftfahrzeuges angepasst, beispielsweise erhöht, werden muss. Aus der Kennlinie wird der neu einzustellende Strom bestimmt und entsprechend an dem Dämpfer eingestellt, so dass nach der Einstellung an dem Dämpfer die gewünschte Dämpferkraft vorliegt. Hierbei hat es sich gezeigt, dass durch bestimmte Stromsprünge Sprünge der Dämpferkraft erzeugt werden, die zu unerwünschten Geräuschen in dem Kraftfahrzeug führen. Erfindungsgemäß werden diese Geräusche dadurch vermindert bzw. unterdrückt, dass ausgehend von dem Momentan-Strom die zulässige Änderung des Stromes pro Zeitintervall durch eine Grenze begrenzt wird. Hierbei kann für eine positive Stromänderung eine andere Grenze vorgegeben werden als für eine negative Stromänderung, so dass eine Anpassung an die Strom-Dämpferkraftkennlinie durch die Vorgabe der Grenzen möglich ist (bei der gezeigten Kennlinie wird man wegen des progressiven Verlaufes für die positive Stromänderung eine kleinere Grenze vorgeben als für die negative Stromänderung).

Darüber hinaus ist es möglich, die Grenze für die zulässige Änderung des Stromes pro Zeitintervall in Abhängigkeit von dem einzustellenden Sollstrom vorzugeben. Beispielhafte Kennlinien, wie die Grenzen in Abhängigkeit von dem einzustellenden Sollstrom vorgegeben werden können, sind der Figur 2 zu entnehmen. Hierbei gibt die obere Kennlinie die jeweiligen Grenzen für positive Stromänderungen vor und die untere Kennlinie die jeweiligen Stromänderungen für negative Stromänderungen. Die Kennlinien sind wiederum an den Verlauf der in der Figur 1 gezeigten Kennlinie angepasst, d. h. mit größer werdenen Sollstrom Iₛₒₗₗ werden die zulässigen Grenzen kleiner, da die Kennlinie der Figur 1 progressiv verläuft.

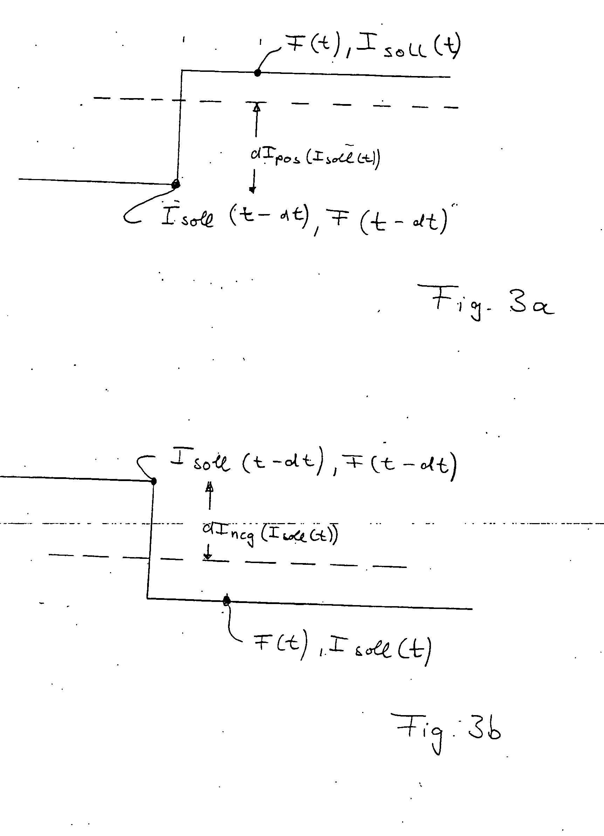

Figur 3a zeigt beispielhaft, wie die erfindungsgemäße Regelung erfolgt, wenn ausgehend von einem bestimmten Zeitpunkt t - dt die momentan eingestellte Dämpferkraft aufgrund der Fahrsituation des Kraftfahrzeuges erhöht werden muss. Zum Zeitpunkt (t-dt) sei die Dämpferkraft gegeben durch F (t-dt) und der Strom durch Iₛₒₗₗ (t-dt). Darüber hinaus wird in der Steuerelektronik des Kraftfahrzeuges aufgrund der konkreten Fahrsituation bestimmt, dass die Dämpferkraft zum Zeitpunkt t durch F (t) gegeben sein müsste, zu der ein bestimmter Sollstrom Iₛₒₗₗ (t) gehört (der aus der entsprechenden Strom-Dämpfkraftkennlinie gemäß Figur 1 bestimmt wird). Darüber hinaus wird in der Steuerelektronik für den Zeitpunkt t die Grenze für die positive Stromänderung dIₚₒₛ (t) in dem Zeitintervall dt bestimmt (bespielsweise aus einer Kennlinie gemäß der Figur 2). Wenn sich durch Überprüfung in der Steuerelektronik des Kraftfahrzeuges ergibt, dass Iₛₒₗₗ (t) größer ist als Iₛₒₗₗ (t-dt)+dIₚₒₛ (t), so wird von der Steuerelektronik an dem entsprechenden Dämpfer der Strom Iₛₒₗₗ (t-dt)+dIₚₒₛ (t) eingestellt. Mit anderen Worten formuliert wird in diesem Fall die positive Stromänderung dI durch die Grenze dIₚₒₛ begrenzt. Es wird dann also nur eine Dämpferkraft eingestellt, die kleiner ist, als die theoretisch berechnete Dämpferkraft F(t), bei der jedoch gewährleistet ist, dass bei einer Umstellung auf diese keine störenden Geräusche entstehen. Wenn sich umgekehrt zeigt, dass Iₛₒₗₗ (t) genauso groß oder kleiner ist als Iₛₒₗₗ (t-dt)+ dIₚₒₛ (t), so wird von der Steuerelektronik des Kraftfahrzeuges der bestimmte Wert exakt eingestellt.

Figur 3b zeigt die entsprechenden Verhältnisse für den Fall, dass F (t-dt) größer ist als die Dämpferkraft, die zum Zeitpunkt t eingestellt werden müsste und durch F (t) gegeben ist. In diesem Fall wird die Regelung durch die Steuerelektronik vollkommen analog vorgenommen, mit dem einzigen Unterschied, dass für die Grenze der Stromänderung pro Zeitintervall dt der Wert d_{neg} (t) vorgegeben wird, der aus der Kennlinie gemäß Figur 2 bestimmt wird.

Entsprechende Regelungen werden durch die Steuerelektronik des Kraftfahrzeuges in direkt aufeinander folgenden Zeitintervallen dt vorgenommen, deren Länge zwischen 1 ms und 50 ms, vorzugsweise zwischen 15 und 25 ms liegt.

## Patentansprüche

1. Verfahren zur Regelung des Dämpferstromes eines durch einen elektrischen Strom verstellbaren Dämpfers eines Kraftfahrzeuges, wobei eine Kennlinie für die Einstellung der Dämpferkraft durch einen bestimmten elektrischen Strom vorliegt,
**dadurch gekennzeichnet, dass**
- der Sollstrom aus dieser Kennlinie ermittelt wird,
- eine Grenze für die zulässige Änderung des Stromes pro Zeitintervall ermittelt wird, und
- der einzustellende Strom pro Zeitintervall gemäß der ermittelten Grenze begrenzt wird.

2. Verfahren nach Anspruch 1, **dadurch gekennzeichnet, dass** ausgehend von einem bestimmten Stromwert für eine positive Stromänderung eine andere Grenze vorgegeben wird als für eine negative Stromänderung.

3. Verfahren nach einem der Ansprüche 1 bis 2, **dadurch gekennzeichnet, dass** sowohl die Grenze für die positive Stromänderung als auch die Grenze für die negative Stromänderung in Abhängigkeit von dem einzuregelnden Sollstrom vorgegeben wird.

4. Verfahren nach einem der Ansprüche 1 bis 3, **dadurch gekennzeichnet, dass** die Grenze der zulässigen Stromänderung pro Zeitintervall sowohl für die positive Stromänderung als auch für die negative Stromänderung als Funktion der Aufbaugeschwindigkeit des Kraftfahrzeuges vorgegeben wird.

5. Verfahren nach einem der Ansprüche 1 bis 4, **dadurch gekennzeichnet, dass** die Dauer eines Zeitintervalls, innerhalb dem eine bestimmte Stromänderung zugelassen wird, die durch eine Grenze beschränkt ist, im Bereich von 1 ms bis 50 ms, vorzugsweise im Bereich von 15 bis 25 ms liegt.

## Claims

1. Method for controlling the damper current of a damper of a motor vehicle, which damper can be adjusted by an electric current, with a characteristic being provided for setting the damper force using a specific electric current,
**characterized in that**
- the setpoint current is ascertained from this characteristic,
- a limit is ascertained for the permissible change in current per time interval, and
- the current per time interval to be set is limited in accordance with the ascertained limit.

2. Method according to Claim 1, **characterized in that**, starting from a specific current value, a different limit is prespecified for a positive change in current than for a negative change in current.

3. Method according to either of Claims 1 and 2, **characterized in that** both the limit for the positive change in current and the limit for the negative change in current are prespecified as a function of the setpoint current to be adjusted.

4. Method according to one of Claims 1 to 3, **characterized in that** the limit of the permissible change in current per time interval both for the positive change in current and for the negative change in current is prespecified as a function of the body speed of the motor vehicle.

5. Method according to one of Claims 1 to 4, **characterized in that** the duration of a time interval within which a specific change in current, which is limited by a limit, is permitted is in the range of from 1 ms to 50 ms, preferably in the range of from 15 to 25 ms.

## Revendications

1. Procédé de régulation du courant d'amortisseur d'un amortisseur d'un véhicule automobile, lequel peut être positionné par un courant électrique, une courbe caractéristique étant disponible pour régler la force de l'amortisseur par un courant électrique donné, **caractérisé en ce que**
- le courant de consigne est déterminé à partir de cette courbe caractéristique,
- une limite de variation admissible du courant par intervalle de temps est déterminée et
- le courant à régler par intervalle de temps est limité conformément à la limite déterminée.

2. Procédé selon la revendication 1, **caractérisé en ce qu'**en partant d'une valeur de courant définie, une limite est prédéfinie pour une variation positive du courant, limite qui est différente pour une variation négative du courant.

3. Procédé selon l'une des revendications 1 à 2, **caractérisé en ce que** la limite de variation positive du courant ainsi que la limite de variation négative du courant sont prédéfinies en fonction du courant de consigne à réguler.

4. Procédé selon l'une des revendications 1 à 3, **caractérisé en ce que** la limite de variation admissible du courant par intervalle de temps est prédéfinie en fonction de la vitesse d'élévation du véhicule automobile, et ce à la fois pour la variation positive du courant et pour la variation négative du courant.

5. Procédé selon l'une des revendications 1 à 4, **caractérisé en ce que** la durée d'un intervalle de temps pendant lequel une variation donnée du courant est autorisée, cette dernière étant restreinte par une limite, est comprise dans la plage de 1 ms à 50 ms, de préférence de 15 à 25 ms.
